# EUROPÄISCHE PATENTANMELDUNG

(11) **EP 3 243 632 A1**
(43) Veröffentlichungstag der Anmeldung: **15.11.2017**
(21) Anmeldenummer: 17169935.8
(22) Anmeldetag: 08.05.2017
(51) Int. Cl.: B29C 64/106, B29C 64/118, B29C 64/321, B33Y 30/00

(54) **DRUCKKOPF UND DRUCKSYSTEM SOWIE VERFAHREN ZUM BETRIEB EINER DRUCKDÜSE**

(30) Priorität: 09.05.2016 DE 102016108547
(71) Anmelder: Hachtel Werkzeugbau GmbH & Co. KG, 73431 Aalen (DE)
(72) Erfinder: Hachtel, Steffen, 73431 Aalen (DE)
(74) Vertreter: Kohler Schmid Möbus Patentanwälte

(57) **Zusammenfassung**

Druckkopf (2) für einen 3D-Drucker, mit einer Düse (4), die eine Düsenspitze (5) mit vorgelagertem Düsenraum (6) aufweist, wobei eine Wärmequelle (7) vorgesehen ist, mit der der Düsenraum (6) zumindest im Bereich der Düsenspitze (5) erwärmbar ist, sowie mit einem Fördermittel (8) zur Förderung von Druckmaterial (3) im Düsenraum (6) in Richtung Düsenspitze (5).

## Beschreibung

Die Erfindung betrifft einen Druckkopf für einen 3D-Drucker, ein Drucksystem mit einem erfindungsgemäßen Druckkopf sowie ein Verfahren zum Betrieb einer Druckdüse.

Bei einem klassischen 3D-Druckverfahren wird ein Filament über einen Vorschub durch einen beheizten Düsenkopf gedrückt. Der Düsenkopf bewegt sich in X-Y-Richtung und legt das Material entsprechend einem CAD-Datensatz auf eine in vertikaler Richtung beweglichen Plattform ab. Die Vorschubgeschwindigkeit in Verbindung mit der Dicke des Filaments bestimmt die Auftragsleistung. Es ist daher erforderlich, die Dicke des Filaments konstant zu halten. Dies führt zu einer aufwendigen Filamentherstellung, die zudem auf wenige Werkstoffe beschränkt ist.

Alternativ ist es bekannt, über eine Schnecke Granulat einer Düse zuzuführen und das Granulat aufzuschmelzen. Aus der Düse des Druckkopfes wird das so aufgeschmolzene Material nur tröpfchenweise abgegeben. Dadurch, dass Werkstoffe in Granulatform verwendet werden, ist es möglich, unterschiedliche Werkstoffe einzusetzen. Außerdem kann auf die Filamentherstellung verzichtet werden. Nachteilig ist jedoch der Verschleiß der Druckdüse, in der eine Nadel über einen Piezoantrieb bewegt wird, um die tröpfchenweise Abgabe des Materials zu steuern. Auch die Verweilzeit des Materials in der Schnecke kann zu Problemen führen.

Aufgabe der vorliegenden Erfindung ist es, einen Druckkopf bereitzustellen, mit dem unterschiedliche Werkstoffe verarbeitet werden können. Außerdem soll es möglich sein, Werkstoffe in einer Form zu verwenden, deren Herstellung besonders einfach ist.

Gelöst wird diese Aufgabe erfindungsgemäß durch einen Druckkopf für einen 3D-Drucker, mit einer Düse, die eine Düsenspitze mit vorgelagertem Düsenraum aufweist, wobei eine Wärmequelle vorgesehen ist, mit der der Düsenraum zumindest im Bereich der Düsenspitze erwärmbar ist, sowie mit einem Fördermittel zur Förderung von Druckmaterial im Düsenraum in Richtung der Düsenspitze. Dadurch, dass Druckmaterial über das Fördermittel im Düsenraum in Richtung Düsenspitze gefördert bzw. geschoben wird und dort das Material mittels der Wärmequelle aufgeschmolzen wird, kann Material in einem konstanten Volumenstrom - anders als bei der Ausführungsform, bei der ein Granulat verwendet wird, ausgegeben werden. Dadurch ist der Prozess des 3D-Druckes besonders zuverlässig und einfach steuerbar. Außerdem ist es mit dem erfindungsgemäßen Druckkopf möglich, unterschiedliche Druckmaterialien zu verarbeiten. Diese müssen insbesondere nicht in Form eines Filaments eingebracht werden. Insbesondere können Rohlinge unterschiedlicher geometrischer Formen eingesetzt werden, die besonders einfach hergestellt werden können. Es ergibt sich ein zuverlässigerer Prozess als bei der Verwendung von Granulat. Der Druckkopf kann ohne Nadel für einen tröpfchenweisen Materialaustrag ausgebildet sein.

Besonders bevorzugt ist es, wenn das Fördermittel einen Kolben umfasst, der in Längsrichtung des Düsenraums relativ zu diesem, insbesondere in diesen, bewegbar ist. Ein solcher Kolben kann besonders einfach bewegt und sein Vorschub gesteuert werden. Dabei lässt sich der Materialaustrag aus der Düse genau bestimmen.

Besonders bevorzugt ist es, wenn der Querschnitt des Kolbens auf den Querschnitt des Düsenraums angepasst ist. Dabei kann der Düsenraum zylindrisch, kegelig oder quaderförmig ausgebildet sein. Entsprechend kann der Querschnitt des Kolbens kreisrund oder rechteckig sein.

Das Fördermittel kann einen Antrieb, insbesondere einen mechanischen, hydraulischen oder pneumatischen Antrieb aufweisen. Mit derartigen Antrieben kann der Vorschub des Kolbens besonders genau geregelt und/oder gesteuert werden.

Der Druckkopf kann Zuführmittel zum Zuführen von Druckmaterial, insbesondere Druckmaterial in Form von Rohlingen, in den Düsenraum aufweisen. Mit diesen Zuführmitteln können die Rohlinge in den Düsenraum verbracht werden und anschließend können die Rohlinge mittels des Fördermittels in Richtung Düsenspitze transportiert werden.

Um einen möglichst unterbrechungsfreien Prozess sicherstellen zu können, kann der Druckkopf ein Magazin zur Bevorratung von Druckmaterial, insbesondere in Form von Rohlingen, aufweisen.

Es kann zumindest ein Sensor zur Erfassung des Vorschubs des Kolbens, des Drucks in der Düse und/oder der Temperatur in der Düse vorgesehen sein. Somit können wichtige Prozessparameter erfasst werden und in einer Steuerung weiterverarbeitet werden.

Weitere Vorteile ergeben sich, wenn eine Steuerung zur Steuerung des Vorschubs des Kolbens, des Drucks in der Düse und/oder der Temperatur in der Düse vorgesehen ist. Der Druckprozess lässt sich auf diese Weise besonders einfach steuern. Die Steuerung kann dabei die mittels des zumindest einen Sensors erfassten Prozessparameter verarbeiten und anhand der erfassten Parameter den weiteren Druckprozess regeln oder steuern.

Besonders vorteilhaft ist es, wenn mehrere Düsen vorgesehen sind. Somit ist es möglich, mit jeder Düse ein anderes Material zu verarbeiten. Somit können Produkte hergestellt werden, die aus unterschiedlichen Materialien hergestellt sind.

Um eine Erwärmung des herzustellenden Produkts möglichst gering zu halten, kann ein Wärmeschutzschild vorgesehen sein. Insbesondere kann durch das Wärmeschutzschild eine Wärmeableitung durch Strahlung und Konvektion in den darunterliegenden Bauraum begrenzt werden.

In den Rahmen der Erfindung fällt außerdem ein Drucksystem mit einem erfindungsgemäßen Druckkopf sowie mit zumindest einem Rohling aus thermoplastischem Material. Das thermoplastische Material kann dabei eine Schmelztemperatur ≤ 450°C aufweisen. Der (Druckmaterial-)Rohling kann in definierter Form herstellbar sein und hinsichtlich Gewicht und/oder Volumen eindeutig bestimmbar sein. Somit ist es bei einer Verwendung des Druckkopfs bekannt, welche Masse an Druckmaterial zur Verfügung steht. Entsprechend kann der Druckprozess eingestellt werden.

Auf besonders einfache Art und Weise kann ein Rohling in einem Spritzgießverfahren hergestellt werden. Insbesondere kann ein Rohling dadurch deutlich einfacher hergestellt werden als ein Filament.

Der Rohling kann in seiner Form einem Düsenraum angepasst sein. Insbesondere kann das Volumen des Rohlings in etwa dem Volumen des Düsenraums entsprechen.

Der Rohling kann zylinder-, kegel- oder kugelförmig ausgebildet sein. Somit kann der Rohling ein definiertes Volumen und Gewicht aufweisen.

In den Rahmen der Erfindung fällt außerdem ein Verfahren zum Betrieb einer Druckdüse, bei dem ein Druckmaterialrohling einem Düsenraum einer Düse zugeführt wird, der Druckmaterialrohling zumindest im Bereich der Düsenspitze der Düse aufgeschmolzen wird und das Druckmaterial mittels eines Fördermittels mit definiertem Volumenstrom aus der Düsenspitze gedrückt wird. Auf diese Art und Weise kann ein gut definierter 3D-Druckprozess durchgeführt werden.

Gemäß einer Verfahrensvariante kann vorgesehen sein, dass der Vorschub des Fördermittels, der Druck in der Düse und/oder die Temperatur in der Düse überwacht werden. Weiterhin kann vorgesehen sein, dass der Druck in der Düse und/oder die Temperatur in der Düse gesteuert werden. Außerdem kann der Vorschub des Fördermittels gesteuert werden.

Der Druckmaterialrohling kann mit einem Spritzgießverfahren hergestellt werden.

Weitere Merkmale und Vorteile der Erfindung ergeben sich aus der nachfolgenden detaillierten Beschreibung eines Ausführungsbeispiels der Erfindung, anhand der Figur der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung ist ein Ausführungsbeispiel der Erfindung dargestellt und in der nachfolgenden Beschreibung näher erläutert.

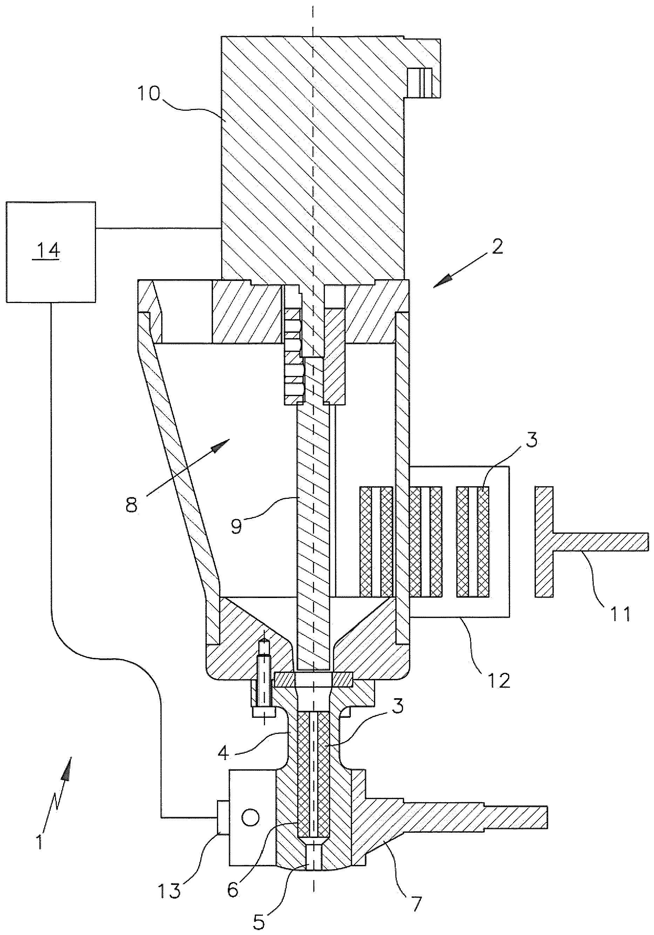

Die Fig. 1 zeigt ein Drucksystem 1 mit einem Druckkopf 2 und Rohlingen 3. Der Druckkopf 2 umfasst eine Düse 4 mit einer Düsenspitze 5, der ein Düsenraum 6 vorgelagert ist. Im Düsenraum 6 befindet sich in der gezeigten Darstellung ein Rohling 3, der den Düsenraum 6 vollständig ausfüllt.

Eine als Heizband ausgebildete Wärmequelle 7 ist im unteren Bereich des Düsenraums 6 angeordnet, sodass der Düsenraum 6 zumindest im Bereich der Düsenspitze 5 erwärmt werden kann, und zwar so, dass zu druckendes Material des Rohlings 3 aufgeschmolzen wird. Das aufgeschmolzene Material kann durch die Düsenspitze 5 ausgetragen werden.

Um das aufgeschmolzene Material durch die Düsenspitze 5 zu drücken, sind Fördermittel 8 vorgesehen, die einen Kolben 9 und einen Antrieb 10 umfassen. Durch den Antrieb 10 kann der Kolben 9 in vertikaler Richtung bewegt werden. Insbesondere kann der Kolben 9 soweit zurückgezogen werden, dass ein Rohling 3 über Zuführmittel 11 aus einem Magazin 12, das der Bevorratung von Rohlingen 3 dient, dem Düsenraum 6 zugeführt werden können. Anschließend kann der Kolben 9 nach unten bewegt werden und das zu druckende Material, insbesondere der Rohling 3, nach unten gefördert werden. Der Querschnitt des Kolbens 9 ist dabei auf den Querschnitt des Düsenraums 6 angepasst.

Die Rohlinge 3 sind aus einem thermoplastischen Material ausgebildet und in einem Spritzgießverfahren hergestellt. Dadurch können die Rohlinge 3 ein definiertes Volumen und ein definiertes Gewicht aufweisen. Außerdem können sie besonders einfach hergestellt werden.

Sensoren 13 können zur Erfassung der Temperatur der Düse 4, des Vorschubs des Materials im Düsenraum 6 und/oder zur Erfassung des Drucks im Düsenraum 6 vorgesehen sein. Die Sensoren 13 können mit einer Steuerung 14 in Verbindung stehen, die anhand der erfassten Daten eine Steuerung oder Regelung des Druckprozesses, insbesondere hinsichtlich des Vorschubs des Kolbens 9, des Drucks in der Düse 4 und/oder der Temperatur in der Düse 4 vornehmen kann. Nicht gezeigt ist eine Materialauflage, insbesondere eine Art Tisch, die relativ zum Druckkopf 2 bewegt werden kann, insbesondere in drei Richtungen relativ zum Druckkopf 2 bewegt werden kann, um auf diese Art und Weise mit dem Material, welches aus der Düsenspitze 5 ausgetragen wird, eine dreidimensionale Gestalt zu erzeugen.

## Patentansprüche

1. Druckkopf (2) für einen 3D-Drucker, mit einer Düse (4), die eine Düsenspitze (5) mit vorgelagertem Düsenraum (6) aufweist, wobei eine Wärmequelle (7) vorgesehen ist, mit der der Düsenraum (6) zumindest im Bereich der Düsenspitze (5) erwärmbar ist, sowie mit einem Fördermittel (8) zur Förderung von Druckmaterial im Düsenraum (6) in Richtung Düsenspitze (5).

2. Druckkopf nach Anspruch 1, **dadurch gekennzeichnet, dass** das Fördermittel (8) einen Kolben (9) umfasst, der in Längsrichtung des Düsenraums (6) relativ zu diesem bewegbar ist.

3. Druckkopf nach Anspruch 2, **dadurch gekennzeichnet, dass** der Querschnitt des Kolbens (9) auf den Querschnitt des Düsenraums (6) angepasst ist.

4. Druckkopf nach einem der vorhergehenden Ansprüche, **dadurch gekennzeichnet, dass** der Düsenraum (6) zylindrisch, kegelig oder quaderförmig ausgebildet ist.

5. Druckkopf nach einem der vorhergehenden Ansprüche, **dadurch gekennzeichnet, dass** das Fördermittel (8) einen Antrieb (10), insbesondere einen mechanischen, hydraulischen oder pneumatischen Antrieb aufweist.

6. Druckkopf nach einem der vorhergehenden Ansprüche, **dadurch gekennzeichnet, dass** Zuführmittel (11) zum Zuführen von Druckmaterial, insbesondere Druckmaterial in Form von Rohlingen (3), vorgesehen sind.

7. Druckkopf nach einem der vorhergehenden Ansprüche, **dadurch gekennzeichnet, dass** ein Magazin (12) zur Bevorratung von Druckmaterial, insbesondere in Form von Rohlingen (3), vorgesehen ist.

8. Druckkopf nach einem der vorhergehenden Ansprüche, **dadurch gekennzeichnet, dass** zumindest ein Sensor (13) zur Erfassung von Vorschub des Kolbens (9), des Drucks in der Düse (4) und/oder der Temperatur in der Düse (4) vorgesehen ist.

9. Druckkopf nach einem der vorhergehenden Ansprüche, **dadurch gekennzeichnet, dass** eine Steuerung (14) zur Steuerung des Vorschubs des Kolbens, des Drucks in der Düse (4) und/oder der Temperatur in der Düse (4) vorgesehen ist.

10. Druckkopf nach einem der vorhergehenden Ansprüche, **dadurch gekennzeichnet, dass** mehrere Düsen (4) vorgesehen sind.

11. Druckkopf nach einem der vorhergehenden Ansprüche, **dadurch gekennzeichnet, dass** ein Wärmeschutzschild vorgesehen ist.

12. Drucksystem (1) mit meinem Druckkopf (2) nach einem der vorhergehenden Ansprüche, und mit zumindest einem Rohling (3) aus thermoplastischem Material.

13. Drucksystem nach Anspruch 12, **dadurch gekennzeichnet, dass** der Rohling (3) in einem Spritzgießverfahren hergestellt ist.

14. Drucksystem nach einem der vorhergehenden Ansprüche 12 oder 13, **dadurch gekennzeichnet, dass** der Rohling (3) in seiner Form an den Düsenraum (6) angepasst ist.

15. Verfahren zum Betrieb einer Druckdüse, bei dem ein Druckmaterialrohling (3) einem Düsenraum (6) einer Düse (4) zugeführt wird, der Druckmaterialrohling (3) zumindest im Bereich der Düsenspitze (5) der Düse (4) aufgeschmolzen wird und das Druckmaterial mittels eines Fördermittels (8) mit definiertem Volumenstrom aus der Düsenspitze (5) gedrückt wird.
